# EUROPEAN PATENT APPLICATION

(11) **EP 4 701 342 A2**
(43) Date of publication of application: **25.02.2026**
(21) Application number: 26151558.9
(22) Date of filing: 30.11.2023
(51) Int. Cl.: H05B 47/155

(54) **GESTURE BASED CONTROL FOR CONTROLLING LIGHTS OF A VEHICLE**

(30) Priority: 23.12.2022 GB 202219632
(62) Divisional of application: 23817828.9
(71) Applicant: AGCO International GmbH, 8212 Neuhausen am Rheinfall (CH)
(72) Inventor: Müller, Adalbert, 87616 Marktoberdorf (DE); Kugelmann, Michael, 87616 Marktoberdorf (DE)
(74) Representative: AGCO Intellectual Property Department

(57) **Abstract**

A light control system (2) for an agricultural vehicle (1) has a light arrangement (3) with at least two lights (4a - 4g), a control unit (6) and a sensory input device (5) with a sensor area (10) for recognizing a gesture input (16, 24). The sensor area (10) has a first light control area (11a) assigned to one of the lights for controlling the one light (4a) and a second light control area (11b) assigned to the other light for controlling the other light (4b). The control unit (6) is configured to control the lights (4a - 4g) of the light arrangement (3) independently from each other in response to a single gesture input (16, 24). The light control system (2) may be controlled by a method of controlling the brightness level of the at least two lights (4a - 4g).

## Description

### FIELD

The present disclosure relates generally to a gesture based control for controlling lights of a vehicle.

### BACKGROUND

A vehicle such as a passenger car may comprise headlights, foglights and rear lights. These lights may be switched on or off by controlling a knob or a button. Other types of vehicles such as off-road vehicles like agricultural or construction vehicles may comprise additional lights as for example work lights for illuminating the surrounding of the off-road vehicle. These lights may be switched on or off. Additionally, the brightness level of the work lights may be controllable.

An illumination output of a light may be controlled by a touch controlled dimmer switch. An example of such a switch is disclosed in U. S. patent 4,246,494. A user may touch a pad of the switch at different locations to control the illumination output of the light.

### BRIEF SUMMARY

It is an objective to provide a gesture based control for controlling the brightness levels of multiple (at least two) lights of a vehicle with a single gesture.

According to an aspect of the invention there is provided a light control system for an agricultural vehicle comprising a light arrangement with at least two lights, a control unit and a sensory input device with a sensor area for recognizing a gesture input. The sensor area comprises a first light control area assigned to one of the lights for controlling the one light and a second light control area assigned to the other light for controlling the other light. The control unit may be configured to control the lights of the light arrangement independently from each other in response to a single gesture input.

The light arrangement may comprise different types of lights such as headlights, foglights, full beam, rear lights, reversing lights, warning lights, spot lights or work lights. The lights may be attached to the vehicle at different locations as for example a roof of the vehicle, a part of the body of the vehicle, a frame or a pillar of a cabin of the vehicle. The sensory input device may be located close to other manual operator controls of the vehicle, for example close to a steering wheel. An operator may control the lights by performing a gesture within the sensor area of the sensory input device. The gesture may be performed in the first light control area or in the second light control area. If a gesture input is recognized in the first light control area one of both lights is controlled. Analogously, if a gesture input is recognized in the second light control area the other light is controlled. Additionally, the gesture may be performed in both light control areas so that the operator may control the one and the other light independently from each other by a single gesture input. I. e., the operator may control multiple lights of the light arrangement without the need of performing a separate gesture for each light. In addition, each light may be controlled independently from each other so that the single gesture input may be used for switching the one and the other light individually as for example switching both lights on or off as well as switching one light on and the other light off.

The control unit may be configured to set a brightness level of each light independently from any other light in response to a single gesture input to a level greater than a minimum brightness level and smaller than a maximum brightness level.

Thus, the single gesture input may not only be used for switching one light on (maximum brightness level) and the other off (minimum brightness level) but also for setting the brightness level of each light to any interim level between the minimum and the maximum brightness level. The interim level may be set for each light individually by the same gesture input. For example, the single gesture input may be used to set the brightness level of the one light to 30% of the maximum brightness level and to set the brightness level of the other light to 75% of the maximum brightness level.

The sensor area may be configured to recognize any gesture of the operator. For example, the gesture may be a hand gesture. The sensor area may comprise a capacitive sensor to recognize a contactless gesture input. The sensory input device may also comprise alternative devices such as a camera to detect a gesture input.

Optionally, the sensor area may be a touch sensitive area for recognizing touch gestures.

The first light control area and the second light control area may comprise each a first brightness control area, a second brightness control area and a third brightness control area for controlling the brightness of the one and the other light.

I. e., a first, a second and a third brightness control area are assigned to the one light as well as another first, another second and another third brightness control area are assigned to the other light. Hence, a single gesture input may be recognized in at least one of the three brightness control areas of the first light control area of the one light and in at least one of the three brightness control areas of the second light control area of the other light. The brightness level of each light may depend on the brightness control area in which the gesture input has been recognized. For example, the single gesture input may be recognized in the second brightness control area of the first light control area to set the brightness level of the one light to a level assigned to the second brightness control area and the single gesture input may also be recognized in the third brightness control area of the second light control area to set the brightness level of the other light to a level assigned to the third brightness control area wherein the brightness level assigned to the second brightness control area and the brightness level assigned to the third brightness control area may be different. Thus, the brightness level of the one and the other light may be controlled individually by a single gesture input in dependence of the brightness control area of the corresponding light in which a gesture input could be recognized.

The control unit may be configured to set a brightness level of a light of the light arrangement to minimum brightness if a gesture input recognized in the light control area of the assigned light is located in the first brightness control area of the light control area of the assigned light only and to maximum brightness if a gesture input recognized in the light control area of the assigned light is located in the third brightness control area of the light control area of the assigned light only.

The minimum brightness level may correspond to a status of emitting no light whereas the maximum brightness level may correspond to a status of emitting full light. Thus, a light may be switched off if a gesture input recognized in the light control area of the assigned light is located in the first brightness control area of the light control area of the assigned light only and may be switched on with full light if a gesture input recognized in the light control area of the assigned light is located in the third brightness control area of the light control area of the assigned light only. If a gesture input recognized in the light control area of the assigned light is not located only in one of the first or the third brightness control area of the light control area of the assigned light but in more than one of the brightness control areas of the light control area of the corresponding light the brightness level may be set to the highest level according to the corresponding brightness control area for example. Nevertheless, a single gesture input may be recognized in more than one light control area located in different brightness control areas of the separate light control areas to control the brightness level of the corresponding lights individually.

The control unit may be configured to determine whether the gesture input was started in a first, a second or a third brightness control area.

I. e., the control unit may distinguish in which of the three brightness control areas a gesture input has been initiated by an operator independently from the light control area the brightness control area is part of. For example, the control unit may determine that a gesture input was started in a second brightness control area which may be part of the first or second light control area.

The control unit may be configured to determine in which of the first brightness control areas, second brightness control areas or third brightness control areas the gesture input was started.

I. e., control unit may exactly determine in which brightness control area of which light control area a gesture input of an operator has been initiated. For example, the control unit may determine that a gesture input was started in the second brightness control area of the first light control area.

The control unit may be configured to determine a demanded brightness level of a light according to a gesture input recognized in the second brightness control area of the assigned light and to set the brightness level of the light according to the demanded brightness level of the light.

Since the first brightness control area assigned to a light may be used to set the brightness level of the light to a minimum level and the third brightness control area assigned to the light may be used to set the brightness level of the light to a maximum level, the second brightness control area assigned to the light may be used to set the brightness level of the light to any interim level between the minimum and the maximum brightness level. The control unit may determine a demanded brightness level based on the gesture input in the second brightness control area and set the interim level in response to the demanded brightness level as for example 30% of the maximum brightness level or 75% of the maximum brightness level. The interim level may be adjusted stepwise by raising or lowering the level according to a predefined step as for example 10%. Alternatively, the interim level may be adjusted continuously between 0 and 100% according to the demanded brightness level. Then, the control unit may set the brightness level of the light according to the interim level. Thus, the light may be dimmed between the minimum and the maximum brightness level of the light according to the determined interim level.

The light arrangement may comprises a non-dimmable light being switchable in an off state if the demanded brightness level is below a switching threshold and being switchable in an on state if the demanded brightness level is above the switching threshold.

Hence, all lights of the light arrangement may be controlled by the light control system irrespectively whether one or more of the lights of the light arrangement are dimmable or not. The switching threshold may be defined at 50% of the maximum brightness level of the corresponding non-dimmable light. If the demanded brightness level of the non-dimmable light is below the brightness threshold the non-dimmable light may be switched off. Otherwise, if the demanded brightness level exceeds the brightness threshold the non-dimmable light may be switched on.

The control unit may be configured to determine a demanded brightness level of a light according to a maximum displacement of the gesture input in the second brightness control area of the assigned light started from the first or the third brightness control area.

When an operator performs a gesture within the sensor area the operator may start the gesture in the first or the third brightness control area of a light and continue the gesture in the second brightness control area of the light. For example, the operator may move a finger from the first brightness control area to the second brightness control area. Then, the control unit may determine a distance from the edge of the first brightness control area to a point of the gesture performed in the second brightness control area being most distanced from the first brightness control area as the maximum displacement of the gesture input in the second brightness control area. Analogously, if the gesture input started in the third brightness control area the maximum displacement may be determined based on a point of the gesture performed in the second brightness control area being most distanced from the third brightness control area. Since there may be only one point being most distanced from the first or the third brightness control area the control unit can determine an unambiguous demanded brightness level based on that point.

The control unit may be configured to set the current brightness level of a light as a brightness threshold and to increase the brightness level of the light if a starting point of the gesture input was recognized in the first brightness control area of the assigned light and the demanded brightness level exceeds the brightness threshold.

The demanded brightness level may exceed the brightness threshold if the maximum displacement of the gesture input from the first brightness control area is higher than the maximum displacement of a previous gesture input from the first brightness control area by which the current brightness level of the light has been set. Thus, an additional condition has to be met before the brightness level of the light may be adjusted. This control strategy may help to ignore unintentional gesture inputs of an operator.

The control unit may be configured to set the current brightness level of a light as a brightness threshold and to reduce the brightness level of the light if a starting point of the gesture input was recognized in the third brightness control area of the assigned light and the demanded brightness level deceeds the brightness threshold.

The demanded brightness level may deceed the brightness threshold if the maximum displacement of the gesture input from the third brightness control area is higher than the maximum displacement of a previous gesture input from the third brightness control area by which the current brightness level of the light has been set. Thus, an additional condition has to be met before the brightness level of the light may be adjusted. This control strategy may help to ignore unintentional gesture inputs of an operator.

The control unit may be configured to determine a demanded brightness level of a light according to a median of a displacement of the gesture input in the second brightness control area of the assigned light if a starting point of the gesture input was detected in the second brightness control area.

A gesture may be performed in a second brightness control area without starting from the first or the third brightness control area. Then, the control unit may not have a clear indication whether a maximum displacement of the gesture input shall be determined from the first or the third brightness control area. Hence, the control unit may determine a median of the displacement of the gesture input in the second brightness control area since the median can be determined without any information about from which of the first or third brightness control area the gesture input started.

At least one of the lights of the light arrangement may be a matrix light having two or more light elements. The second brightness control area of the assigned matrix light may comprise a separate switch field for each light element of the matrix light.

The two or more light elements of the matrix light may be individually controllable. For example, the matrix light may have 16 light elements arranged in a 4 x 4 matrix. The second brightness control area assigned to the matrix light may have a number of switch fields corresponding to the number of light elements of the matrix light. The switch fields may be arranged in a matrix corresponding to the matrix of the matrix light for a very intuitive control of the light elements of the matrix light. So, in case of a 4 x 4 matrix light the second brightness control area assigned to the matrix light may comprise 16 switch fields arranged in a 4 x 4 matrix.

The first, the second and the third brightness control areas may be arranged in circular shapes.

In such an arrangement, the brightness control areas of each lamp can be similarly arranged as the lights in the light arrangement of the vehicle. For example, the first to third brightness control areas assigned to a light located at a front side of the vehicle may be arranged at a top part of the sensor area, the first to third brightness control areas assigned to a light located at a right side of the vehicle may be arranged at a right part of the sensor area, the first to third brightness control areas assigned to a light located at a rear side of the vehicle may be arranged at a bottom part of the sensor area and the first to third brightness control areas assigned to a light located at a left side of the vehicle may be arranged at a left part of the sensor area. Thus, a very intuitive control of the light arrangement may be achieved. Alternatively, the brightness control areas may be arranged in rectangular shapes.

The first brightness control areas may be arranged in most inner circular shapes and the third brightness control areas may be arranged in most outer circular shapes.

In such an arrangement, the first brightness control areas may be arranged in the middle of the sensor area. Then, the brightness level of a light may be increased by a gesture input starting from the middle of the sensor area and being performed outwardly in direction to the third brightness control area. The outward directed gesture input may be associated with a lamp emitting out more light. Further, the brightness level of a light may be decreased by a gesture input starting from the third brightness control area of the sensor area and being performed inwardly in direction to the middle of the sensor area. The inward directed gesture input may be associated with a lamp emitting out less light. Thus, a very intuitive control of the light arrangement may be achieved.

The sensory input device may comprise an indicator to indicate a current brightness level for each of the first and second lights. The control unit may be configured to determine a brightness level of the one light and a brightness level of the other light and to control the indicator to indicate the brightness level of the one light and a brightness level of the other light.

The indicator may be an optical visible indicator being adjustable according to different levels of the brightness level. The indicator may be color coded to indicate different brightness levels by a different color. Alternatively, the indicator may comprise a light bar to indicate different brightness levels by different bar heights of the light bar. Based on the indicator, the operator may check whether the brightness levels of the first and second lights are set correctly.

The indicator may be integrated at least partly in the first light control area for indicating the brightness level of the one light and in the second light control area for indicating the brightness level of the other light.

Thus, the sensor area of the sensory input device may be used for controlling the brightness levels of the lights as well as for indicating the brightness level of the corresponding lights.

The indicator may be illuminable.

For example, the light control areas of the corresponding lights may be individually illuminated by the indicator comprising light elements integrated in the sensory input device such as for example LEDs or a display. The sensor area may have an at least partly transparent surface for illuminating the first and second light control areas. For example, each light control area may be illuminated by illuminating the second brightness control area of the corresponding light control area. The size of the illuminated area of the second brightness control area may correspond to the current brightness level of the light assigned to the second brightness control area. For example: If a light is switched off, the second brightness control area assigned to the light is not illuminated. If the current brightness level of the light is set to 100%, the full area of the second brightness control area assigned to the light may be illuminated. If the current brightness level of the light is set to any other intermediate value between 0 and 100%, an area of the second brightness control area assigned to the light corresponding to this intermediate value may be illuminated only. Thus, a very intuitive control of the light arrangement may be achieved.

The sensory input device may comprise at least one key. The control unit may be configured to determine a brightness level of the one light and a brightness level of the other light and to assign at least one of the brightness levels of the one and the other light to the key.

The key may be programmable so that the control unit may save a current lighting setting to the memory and assign the lighting setting to the key. The key may be used by an operator as a short-key for restoring the previously saved lighting setting and to set the brightness level of each light as saved.

The control unit may be configured to determine a number of lights of the light arrangement and to assign each light to a different light control area.

The control unit may also be configured to adjust a number of light control areas of the sensor area according to the number of lights of the light arrangement.

Thus, the light control system may automatically configure itself and may automatically be adapted if the number of the lights of the light arrangement is changed.

The control unit may be configured to swap a lighting setting of the lights at a right side of the light arrangement with a lighting setting of the lights at a left side of the light arrangement.

For example, the control unit may swap the settings if the vehicle changes the driving direction from one direction (e. g. direction to the north) to an opposite direction (e. g. direction to the south). Thus, a glaring of any persons or drivers may be avoided automatically when the vehicle passes the persons or drivers from one direction or from the other direction.

The control unit may be configured to determine an absolute value of the maximum brightness level of the one light and an absolute value of the maximum brightness level of the other light and to adjust the size of the first light control area according to the absolute value of the maximum brightness level of the one light and the size of the second light control area according to the absolute value of the maximum brightness level of the other light.

For example, a light having a higher absolute value of the maximum brightness level may be represented by a light control area covering a greater area of the sensor area than a light having a lower absolute value of the maximum brightness level. The absolute value of the maximum brightness level of a light may be determined by the control unit based on the properties of the light such as luminous intensity (candela) or illuminance (lux) for example.

Another aspect includes a method of controlling the brightness level of at least two lights of a light arrangement by a sensory input device comprising a first light control area with a first, a second and a third brightness control area assigned to one of the at least two lights and a second light control area with a first, a second and a third brightness control area assigned to the other of the at least two lights, the method comprising the steps of recognizing a gesture input in the second brightness control area assigned to the one light and recognizing a gesture input in the second brightness control area assigned to the other light, determining a demanded brightness level for each of the at least two lights according to a maximum displacement of the gesture input in each of the second brightness control areas assigned to the at least two lights started from a first or a third brightness control area and / or determining a demanded brightness level for each of the at least two lights according to a median of a displacement of the gesture input in each of the second brightness control area assigned to the at least two lights if a starting point of the gesture input was detected in one of the second brightness control areas.

The method may be carried out by the control unit to control the lights of the light arrangement independently from each other in response to a single gesture input. The method may recognize if a single gesture input of an operator is performed in both light control areas. The method may determine a demanded brightness level for each light separately based on the single gesture input performed in the different light control areas. Then, each light may be controlled independently from each other according to the demanded brightness levels by the control unit so the one and the other light may be switched individually as for example setting the brightness level of one light to a first level and setting the brightness level of the other light to a second level being different to the first level. I. e., the operator may control multiple lights of the light arrangement without the need of performing a separate gesture for each light.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural vehicle with a light arrangement from a first perspective.
FIG. 2 illustrates the agricultural vehicle of FIG. 1 from a second perspective.
FIG. 3 illustrates an aspect of the subject matter in accordance with one embodiment.
FIG. 4 illustrates a sensory input device for controlling lights of the light arrangement.
FIG. 5A illustrates a sensory input device for controlling lights of the light arrangement.
FIG. 5B illustrates a sensory input device for controlling lights of the light arrangement.
FIG. 6A illustrates a sensory input device for controlling lights of the light arrangement.
FIG. 6B illustrates a sensory input device for controlling lights of the light arrangement.
FIG. 6C illustrates a sensory input device for controlling lights of the light arrangement.
FIG. 7A illustrates a sensory input device for controlling lights of the light arrangement.
FIG. 7B illustrates a sensory input device for controlling lights of the light arrangement.
FIG. 8A illustrates a sensory input device for controlling lights of the light arrangement.
FIG. 8B illustrates a sensory input device for controlling lights of the light arrangement.
FIG. 9A illustrates a sensory input device for controlling lights of the light arrangement.
FIG. 9B illustrates a sensory input device for controlling lights of the light arrangement.
FIG. 10A illustrates a sensory input device for controlling lights of the light arrangement.
FIG. 10B illustrates a sensory input device for controlling lights of the light arrangement.
FIG. 11A illustrates a sensory input device for controlling lights of the light arrangement.
FIG. 11B illustrates a sensory input device for controlling lights of the light arrangement.
FIG. 11C illustrates a sensory input device for controlling lights of the light arrangement.
FIG. 12A illustrates a sensory input device for controlling lights of the light arrangement.
FIG. 12B illustrates a sensory input device for controlling lights of the light arrangement.
FIG. 13 is a simplified view of a control unit of the vehicle shown in FIG. 1 and FIG. 2;

### DETAILED DESCRIPTION

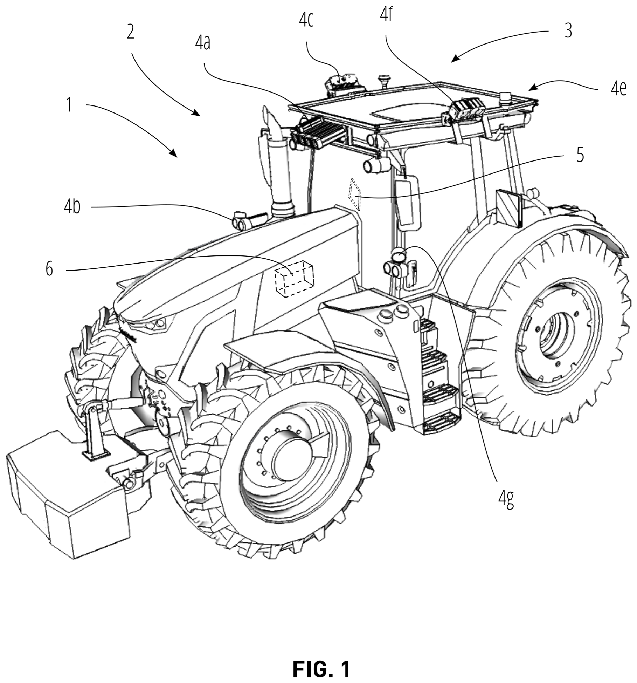

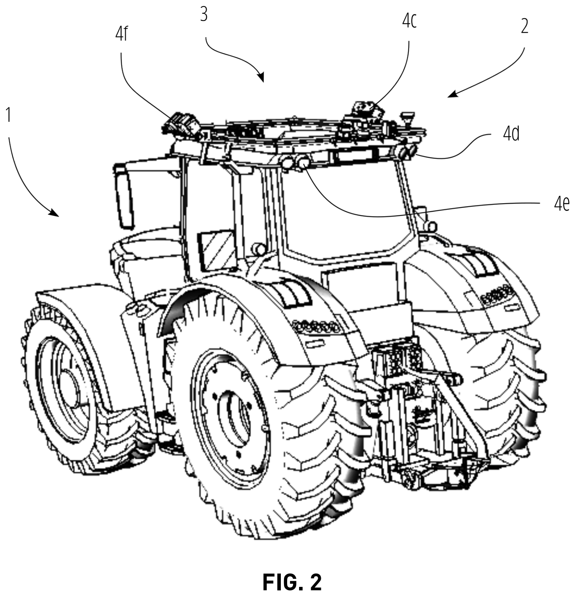

FIG. 1 and FIG. 2 show an agricultural vehicle 1 comprising a light control system 2 with a light arrangement 3, a control unit 6 and a sensory input device 5. The light arrangement 3 comprises several lights 4a to 4g. Lights 4a, 4c, 4d, 4e and 4f are attached to a roof of the vehicle 1. Lights 4b and 4g are attached to a pillar of a cabin of the vehicle 1. The light arrangement 3 may comprise additional lights. The lights 4a to 4g are designed as work lights. Alternatively, some of the lights 4a to 4g or some of the additional lights may be a headlight, a foglight, a full beam, a rear light, a reversing light, a warning light or a spot light. The lights 4a to 4g may be of any type such as a conventional light, a halogen light or a LED. The lights 4a to 4g may be dimmable lights. At least one of the lights 4a to 4g may be a matrix light with individually controllable light elements arranged in a matrix as for example a 4 x 4 matrix.

The sensory input device 5 is a human machine interface and is integrated in the cabin of the vehicle 1. The sensory input device 5 is close to other control elements such as a steering wheel for a direct access by an operator of the vehicle. The sensory input device 5 can be used by an operator to control the brightness level of each light 4a to 4g of the light arrangement 3 individually.

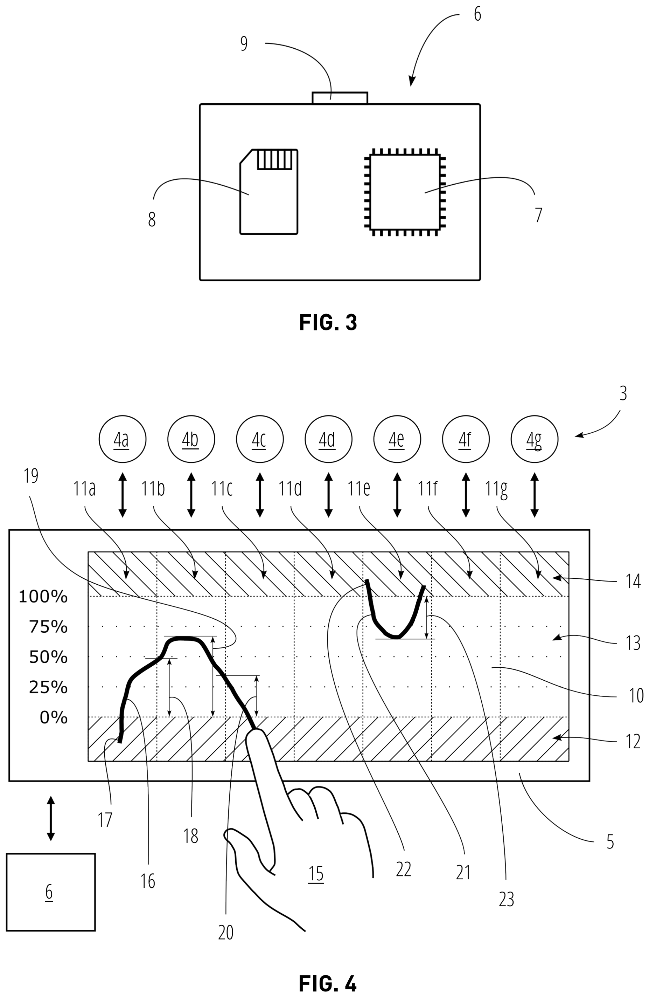

FIG. 3 shows the control unit 6 comprising an interface 9, a controller 7 and a memory 8. The control unit 6 is connected with the light arrangement 3 and the sensory input device 5 for exchanging signals between these devices and for processing of the signals. The control unit 6 may receive and send signals or data via the interface 9. The interface 9 may be a wireless interface or a connector. The controller 7 may store the data or signals received by the control unit 6 in the memory 8. The memory 8 may contain additional data or executable computer program products, for example in terms of a computer-implemented method, that may be retrieved, processed or executed by the controller 7. Data or signals resulting from the processing of data or signals or from the execution of a computer program product may be stored to the memory 8 or sent to the interface 9 by the controller 7.

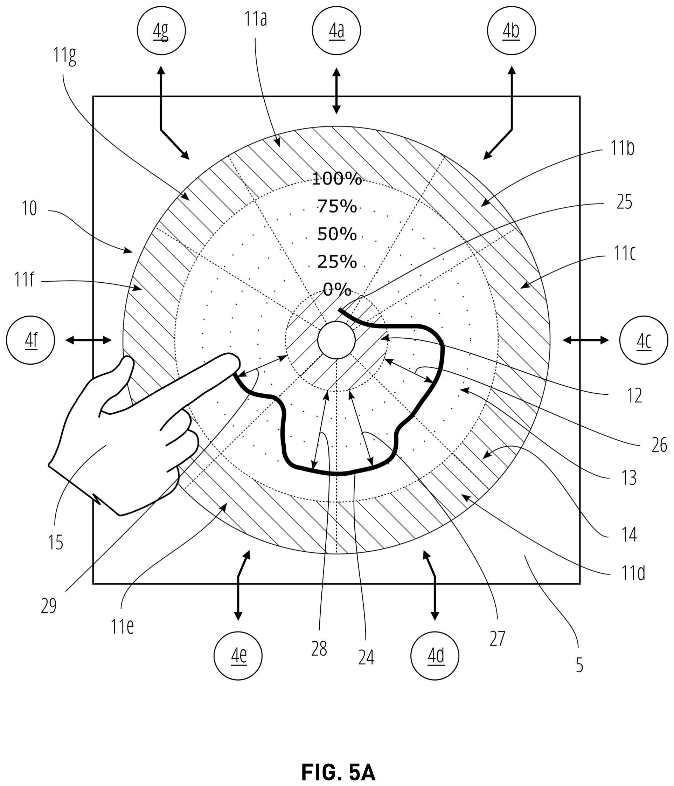

FIG. 4 shows the sensory input device 5 having sensor area 10 with a rectangular shape. Alternatively, the sensor area 10 may have a different shape as for example a circular shape as shown in FIG. 5A. The sensor area 10 is configured to recognize a gesture input 16 or 21 and is designed as a touch sensitive area for recognizing touch gestures performed by a hand 15 or a finger of an operator. Optionally, the sensor area 10 may comprise a capacitive sensor to recognize a contactless gesture input.

The sensor area 10 comprises several light control areas 11a to 11g. Each light control area 11a to 11g is assigned to a corresponding light 4a to 4g. For example, a first light control area 11a is assigned to light 4a, a second light control area 11b is assigned to light 4b and a third light control area 11c is assigned to light 4c and so on so that a light can be controlled according to a gesture input (16, 21) performed in its assigned light control area.

The sensor area 10 is divided into a first, a second and a third brightness control area 12, 13 and 14 overlapping the light control areas 11a to 11g. Hence, each light control area 11a to 11g comprises a first, a second and a third brightness control area 12, 13 and 14 so that a brightness level of a light can be controlled according to a gesture input (16, 21) performed in a brightness control area of its assigned light control area. The first, second and third brightness control areas 12, 13 and 14 may be arranged in rectangular shapes in case of a rectangular sensor area 10 as shown in FIG. 4 or may be arranged in circular shapes in case of a circular sensor area 10 as shown in FIG. 5A. If the first, second and third brightness control areas 12, 13 and 14 are arranged in circular shapes then the first brightness control areas 12 may be arranged in radially most inner circular shapes and the third brightness control areas 14 may be arranged in radially most outer circular shapes.

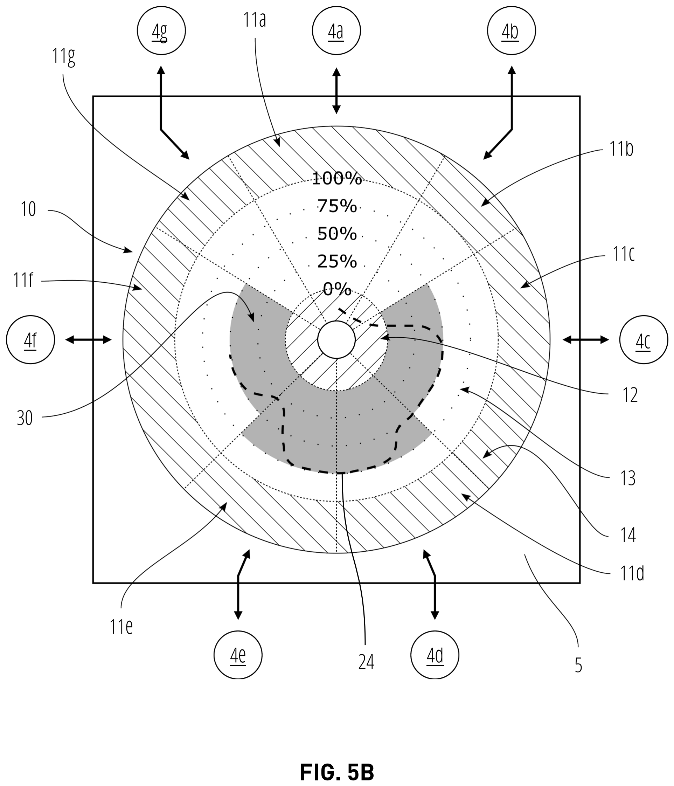

The sensory input device 5 comprises an illuminable indicator 30 integrated at least partly in the second brightness control area 13 of each light control area 11a to 11g. The indicator 30 comprises appropriate illumination means such as LEDs or a display to illuminate the second brightness control areas 13 of each light control area 11a to 11g individually. The LEDs could be arranged in a light bar for indicating discrete brightness levels. The display could provide a graphical use interface (GUI) for indicating different brightness levels. The sensory input device 5 may comprise a transparent cover to protect the indicator 30. The control unit 6 controls the indicator 30 for illuminating the second brightness control area 13 of each light control area 11a to 11g at least partly so that the illuminated area of each second brightness control area 13 may correspond to the current brightness level of the light assigned to the respective second brightness control area. For example, the control unit 6 controlled the indicator 30 to illuminate an area of the second brightness control area 13 as shown in FIG. 5B. The illuminated area of the second brightness control area 13 of the light control area 11c assigned to light 4c extends to a percentage value of 50% to indicate that the brightness level of light 4c corresponds to a percentage value of 50% of the maximum brightness level of light 4c. Analogously, the illuminated area of the second brightness control area 13 of the light control area 11d assigned to light 4d extends to a percentage value of 75% to indicate that the brightness level of light 4d corresponds to a percentage value of 75% of the maximum brightness level of light 4d. The second brightness control area 13 of the light control area 11b is not illuminated to indicate that the assigned light 4b is switched off.

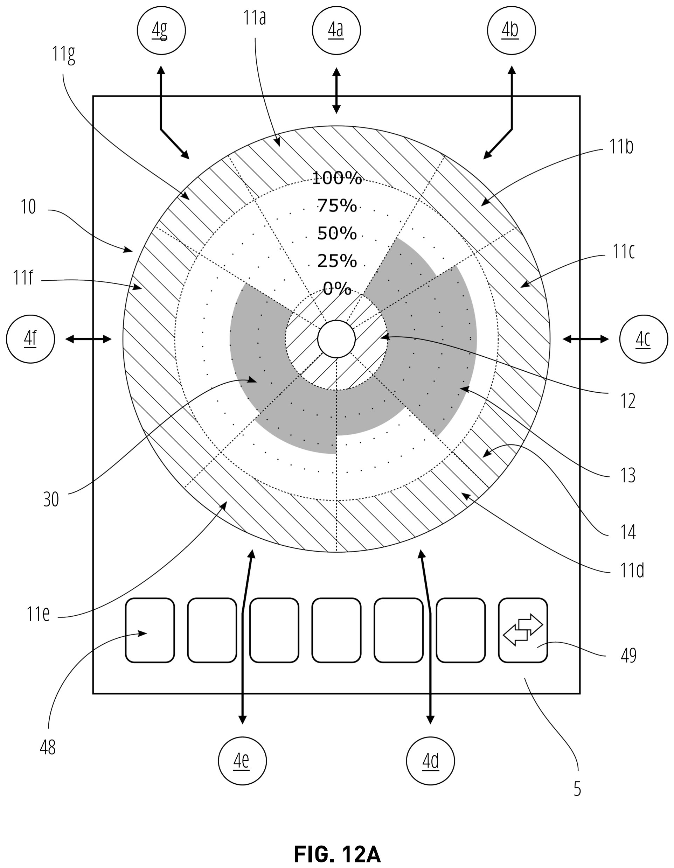

The sensory input device 5 may optionally comprise at least one key 48 as depicted in FIG. 12A. The number of the keys 48 may optionally correspond to the number of lights 4a to 4g.

When a gesture input (16, 21) is recognized by the sensory input device 5 a corresponding signal is sent to the control unit 6 for processing the gesture input and for controlling the brightness level of the lights 4a to 4g of the light arrangement 3 accordingly. The control unit 6 is configured to control the lights 4a to 4g of the light arrangement 3 independently from each other in response to a single gesture input. As can be exemplarily seen in FIG. 4, a operator may perform a single gesture input 16 in more than one light control area by moving the finger of his hand 15 from a starting point 17 in the first brightness control area of the light control area 11a over the second brightness control area of the light control area 11b back to the first brightness control area of the light control area 11c to control the brightness level of the lights 4a, 4b and 4c.

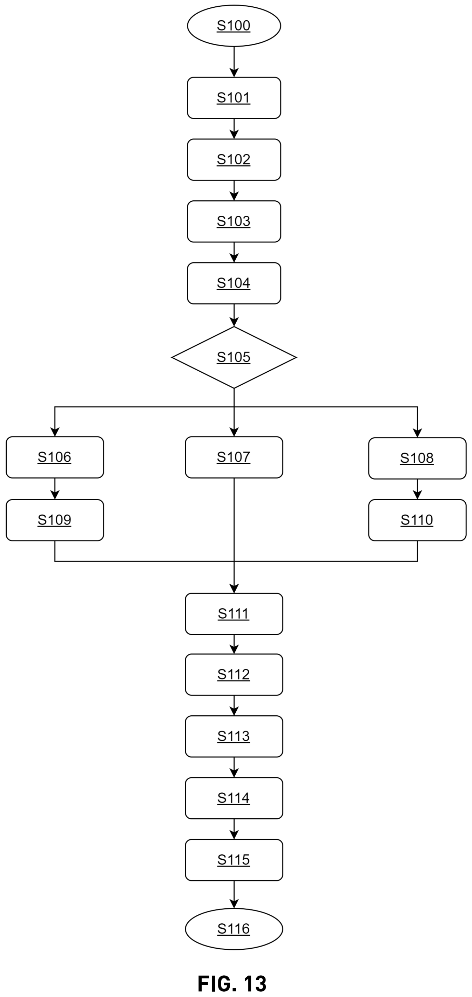

The control unit 6 carries out a method for controlling the brightness levels of each light 4a to 4g according to a gesture input of an operator. FIG. 13 shows a flow diagram of the method. The method may be a computer-implemented method stored as a computer program product in the memory 8 of the control unit 6. The control unit 6 is configured to carry out the method that may be executed by the controller 7. The method is described by way of example of several steps without any restriction in respect of that steps. I. e. the number or the order of steps may be adapted, for example single steps may be excluded and/or added and executed earlier or later than described. The method starts with step S100 and proceeds to step S101.

At step S101, the control unit 6 receives the signals sent from the sensory input device 5 due to an gesture input of the operator.

The method proceeds to step S102 and the control unit 6 determines whether the gesture input was started in a first, a second or a third brightness control area 12, 13 or 14 and if so in which of the first brightness control areas 12, second brightness control areas 13 or third brightness control areas 14 the gesture input was started. Thus, the control unit 6 would determine that the gesture input 16 was started in the first brightness control area of the light control area 11a due to the starting point 17. But an alternative gesture input 21 may have a starting point 22 as exemplarily shown in FIG. 4 so that the control unit 6 would determine that the gesture input 21 was started in the third brightness control area of the light control area 11e.

The method proceeds to step S103 and the control unit determines whether a gesture input recognized in the light control area of the assigned light is located in the first brightness control area 12 of the light control area of the assigned light only or whether a gesture input recognized in the light control area of the assigned light is located in the third brightness control area 14 of the light control area of the assigned light only. As can be exemplarily seen in FIG. 5A, a gesture input 24 extends out of the first brightness control area 12 not until after the light control area 11c: The gesture input 24 is located in the first brightness control area 12 of the light control area 11a of the assigned light 4a and in the first brightness control area 12 of the light control area 11b of the assigned light 4b without extending into the other brightness control areas 13 or 14 of the corresponding light control areas 11a and 11b. Thus, the control unit 6 determines that gesture input 24 recognized in the first light control area 11a and 11b of the assigned lights 4a and 4b is located in the first brightness control area 12 of the light control area 11a of the assigned light 4a and of the light control area 11b of the assigned light 4b only.

Then, the control unit 6 sets a brightness level of a light 4a to 4g to minimum brightness if a gesture input recognized in the light control area of the assigned light is located in the first brightness control area 12 of the light control area of the assigned light only and to maximum brightness if a gesture input recognized in the light control area of the assigned light is located in the third brightness control area 14 of the light control area of the assigned light only. I. e. in case of gesture input 24, the brightness level of light 4a and light 4b are set to minimum brightness. Since minimum brightness may correspond to a status of emitting no light and maximum brightness may correspond to a status of emitting full light, lights 4a and 4b won't emit any light. But alternatively, minimum brightness and maximum brightness may be defined by other brightness levels than zero light or full light.

Next to gesture inputs performed in the first or third brightness control areas of the lights 4a to 4g only, also gesture inputs being at least partly performed in the second brightness control area 13 can be processed by the control unit 6 to set a brightness level of at least one of the lights 4a to 4g independently from any other light of the light arrangement 3 in response to a single gesture input to a level greater than the minimum brightness level and smaller than the maximum brightness level as described in the following method steps.

The method proceeds to step S104 and the control unit 6 determines whether the recognized gesture input extends into the second brightness control area 13 at any light control area 11a to 11g. As can be exemplarily seen in FIG. 4, the gesture input 16 is located in the second brightness control area 13 of the light control areas 11a, 11b and 11c as well as the gesture input 21 is located in the second brightness control area 13 of the light control area 11e assigned to light 4e. Thus, the control unit 6 processes the gesture input 16 and the gesture input 21 to determine a demanded brightness level for each of the lights 4a, 4b and 4c according to the single gesture input 16 and to determine a demanded brightness level for the light 4e according to the single gesture input 21 that have been recognized in the second brightness control areas 13 of the assigned lights 4a, 4b, 4c and 4e.

The determination of the demanded brightness level depends on the brightness control area in which the starting point of the gesture input was determined (see step S102). The method proceeds to step S105 and the control unit 6 decides with which subsequent steps the method will proceed to determine the demanded brightness level for each of the lights 4a to 4g.

If the starting point of the gesture input is located in the first brightness control area 12 the method proceeds with step S 106. If the starting point of the gesture input is located in the second brightness control area 13 the method proceeds with step S107. If the starting point of the gesture input is located in the third brightness control area 14 the method proceeds with step S 108. As can exemplarily be seen in FIG. 4, the starting point 17 of the gesture input 16 is located in the first brightness control area 12 and the starting point 22 of the gesture input 21 is located in the third brightness control area 14. So, the control unit 6 determines the demanded brightness levels for each of the lights 4a, 4b and 4c according to step S106 and the demanded brightness level for the light 4e according to step S108.

The demanded brightness level for a light is exemplarily expressed by a percentage value between 0 and 100% of the maximum brightness level of the corresponding light. I. e., a demanded brightness level of 100% corresponds to a status of emitting full light, a demanded brightness level of 0% corresponds to a status of emitting no light and a demanded brightness level of any other percentage value corresponds to a status of emitting light according to the percentage value. Alternatively, the demanded brightness level can be defined by other values such as absolute values.

At step S106, the control unit 6 determines the demanded brightness level of a light according to a maximum displacement of the gesture input in the second brightness control area 13 of the assigned light started from the first brightness control area 12. As exemplarily shown in FIG. 4, the maximum displacement of the gesture input 16 in the second brightness control area 13 of the assigned light 4a started from the first brightness control area 12 is indicated by the maximum displacement 18 corresponding with a percentage value of 49%. Thus, the control unit 6 sets the demanded brightness level for light 4a to the percentage value of the maximum displacement 18 of 49%. The maximum displacement of the gesture input 16 in the second brightness control area 13 of the assigned light 4b started from the first brightness control area 12 is indicated by the maximum displacement 19 corresponding with a percentage value of 69%. Thus, the control unit 6 sets the demanded brightness level for light 4b to the percentage value of the maximum displacement 19 of 69%. The maximum displacement of the gesture input 16 in the second brightness control area 13 of the assigned light 4c started from the first brightness control area 12 is indicated by the maximum displacement 20 corresponding with a percentage value of 34%. Thus, the control unit 6 sets the demanded brightness level for light 4c to the value of the maximum displacement 20 of 34%. Hence, one single gesture input can be used to determine individually a demanded brightness level for each of the lights of the light arrangement 3.

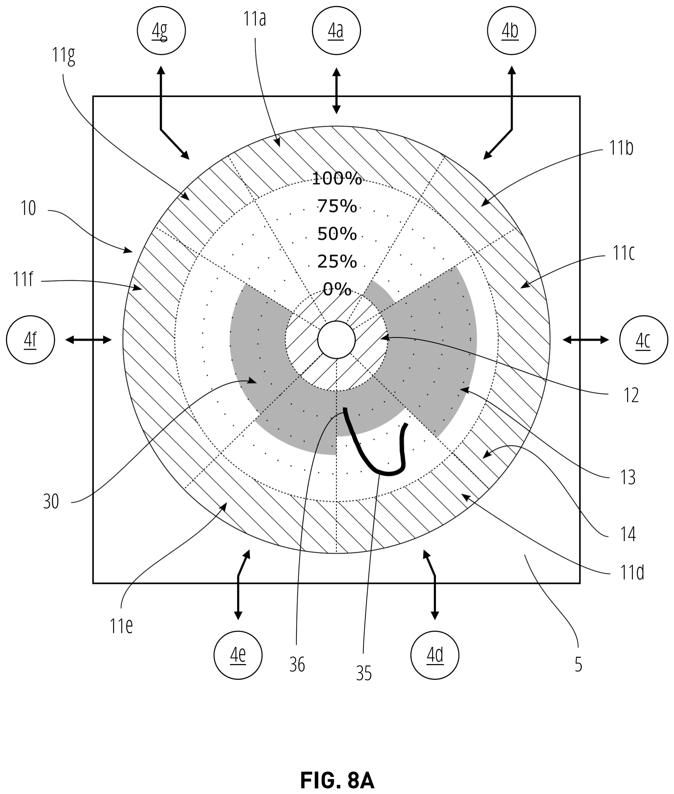

At step S107, the control unit 6 determines the demanded brightness level of a light according to a median of a displacement of the gesture input in the second brightness control area 13 of the assigned light if a starting point of the gesture input was detected in the second brightness control area 13. As exemplarily shown in FIG. 8A, a gesture input 35 with a starting point 36 in the second brightness control area 13 of the assigned light 4d reaches from a maximum percentage value of 88% in the second brightness control area 13 to a minimum percentage value of 14% in the second brightness control area 13. This may result to a median displacement having a percentage value of 51%. Alternatively, an arithmetic mean or an integral of the values of the gesture input may be determined for the median displacement which may lead to different percentage values. Thus, the control unit 6 sets the demanded brightness level for light 4d to the value of the median displacement of 51%.

At step S108, the control unit 6 determines the demanded brightness level of a light according to a maximum displacement of the gesture input in the second brightness control area 13 of the assigned light started from the third brightness control area 14. As exemplarily shown in FIG. 4, the maximum displacement of the gesture input 21 in the second brightness control area 13 of the assigned light 4e started from the third brightness control area 14 is indicated by the maximum displacement 23 corresponding with percentage value of 65%. Thus, the control unit 6 sets the demanded brightness level for light 4e to the value of the maximum displacement 23 of 65%.

Once a demanded brightness level for a light 4a to 4g has been determined the method proceeds to step S111 and the control unit sets the brightness level of the corresponding light 4a to 4g according to the demanded brightness level. If the light whose brightness level shall be set is a dimmable light the brightness level of this light may continuously be adjusted according to the percentage value of the demanded brightness level. Alternatively, the light may be adjusted stepwise for increasing or decreasing the brightness level of the light by a predefined step of for example 10%. So, the brightness level of the light may be set to 0%, 10%, 20%, ... 90%, 100%. In case of a non-dimmable light the light may be switched on if the demanded brightness level is greater than a switching threshold of 50% or switched off if the demanded brightness level is smaller (or equal) than the switching threshold of 50%. Alternatively, another percentage value may be defined as switching value.

The demanded brightness levels of each light 4a to 4g may be optionally compared with a brightness threshold to decide whether the brightness level of a light 4a to 4g has to be adjusted or not. So, the method may optionally proceed after step S106 to S109 or may optionally proceed after step S108 to step S110. Otherwise the method steps to step S111 after step S106 or step S108.

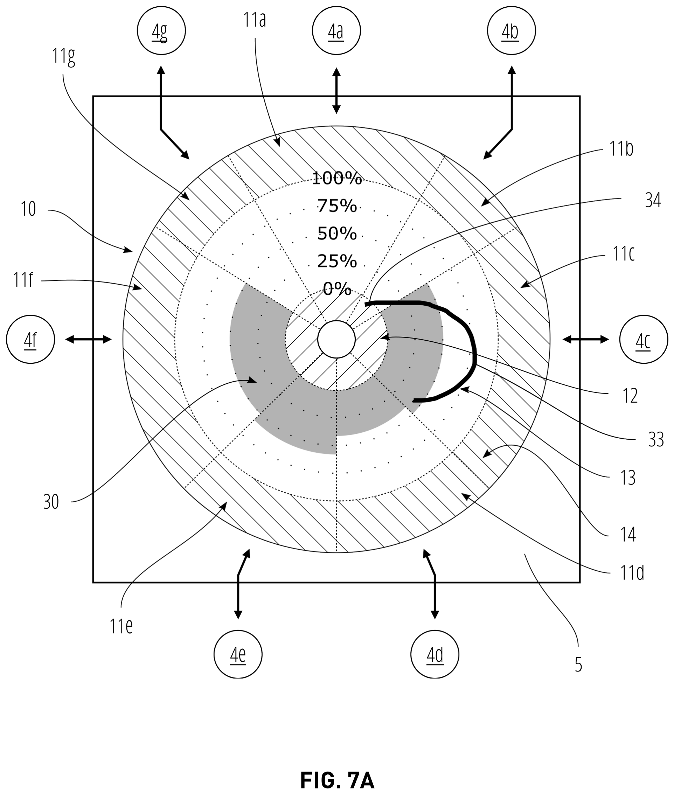

At step S109, the control unit 6 sets the current brightness level of a light 4a to 4g as a brightness threshold for this light and increases the brightness level of the light if a starting point of the gesture input was recognized in the first brightness control area 12 of the assigned light and if the demanded brightness level exceeds the brightness threshold. As exemplarily shown in FIG. 7A, a gesture input 33 with a starting point 34 has been performed in the second light control areas 11b and 11c assigned to the lights 4b and 4c. Based on the gesture input 33, the control unit 6 may have determined a demanded brightness level of a percentage value of 19% for light 4b and a demanded brightness level of a percentage value of 80% for light 4c.

As indicated by the illuminated area of the light control areas 4b and 4c, the current brightness level of light 4b is set to a percentage value of 62% and the current brightness level of light 4c is set to a percentage value of 50%. Thus, the control unit 6 determines a brightness threshold of a percentage value of 62% for light 4b and a brightness threshold of a percentage value of 50% for light 4c. Since the demanded brightness level of light 4b does not exceed the brightness threshold of light 4b, the control unit 6 does not adjust the brightness level of light 4b. But the demanded brightness level for light 4c having a percentage value of 80% exceeds the brightness threshold of light 4c having a percentage value of 50%. Thus, the control unit 6 increases the brightness level of light 4c according to the demanded brightness level to a percentage value of 80% at the subsequent method step S111.

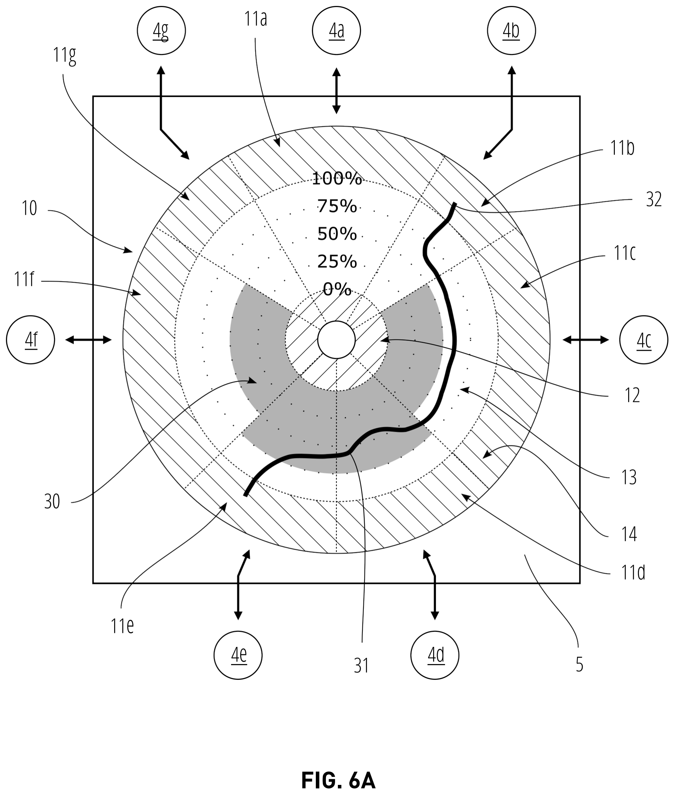

At step S110, the control unit 6 sets the current brightness level of a light 4a to 4g as a brightness threshold for this light and reduces the brightness level of the light if a starting point of the gesture input was recognized in the third brightness control area 14 of the assigned light and if the demanded brightness level deceeds the brightness threshold. As exemplarily shown in FIG. 6A, a gesture input 31 with a starting point 32 has been performed in the second light control areas 11b to 11e assigned to the lights 4b to 4e. Based on the gesture input 31, the control unit 6 may have determined a demanded brightness level of 62% for light 4b, a demanded brightness level of 62% for light 4c, a demanded brightness level of 42% for light 4d and a demanded brightness level of 57% for light 4e.

As indicated by the illuminated area of the light control areas 4c, 4d, 4e and 4f, the current brightness levels of lights 4c and 4f are set to a percentage value of 50% and the current brightness levels of lights 4d and 4e are set to a percentage value of 75%. Thus, the control unit 6 determines a brightness threshold of a percentage value of 50% for light 4c and 4f, a brightness threshold of a percentage value of 75% for lights 4d and 4e. Since the demanded brightness level of light 4c does not deceed the brightness threshold of light 4c, the control unit 6 does not adjust the brightness levels of lights 4c. But the demanded brightness level for light 4d having a percentage value of 42% deceeds the brightness threshold of light 4d having a percentage value of 75% and the demanded brightness level for light 4e having a percentage value of 57% deceeds the brightness threshold of light 4e having a percentage value of 75%. Thus, the control unit 6 decreases the brightness level of light 4d according to the demanded brightness level to a percentage value of 42% and the brightness level of light 4e according to the demanded brightness level to a percentage value of 57% at the subsequent method step S111.

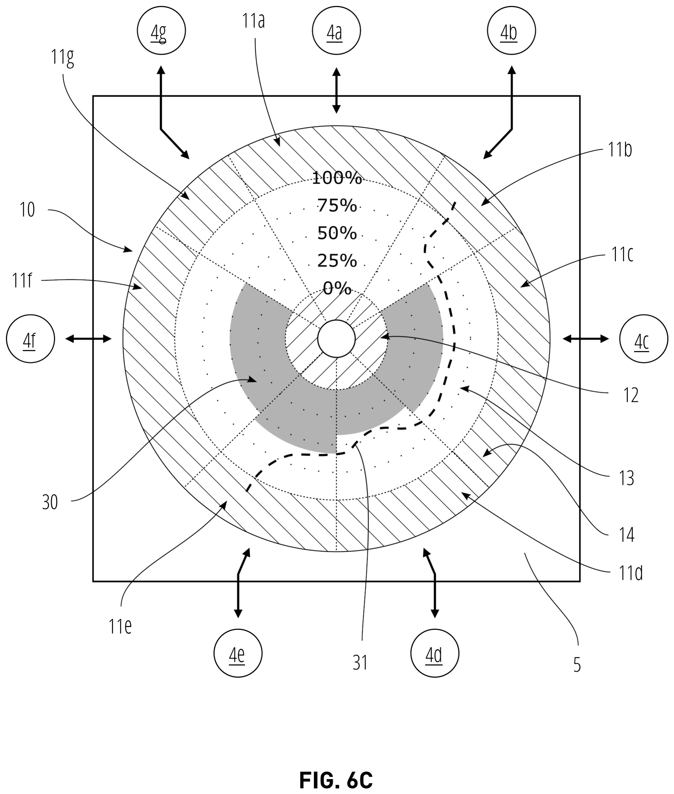

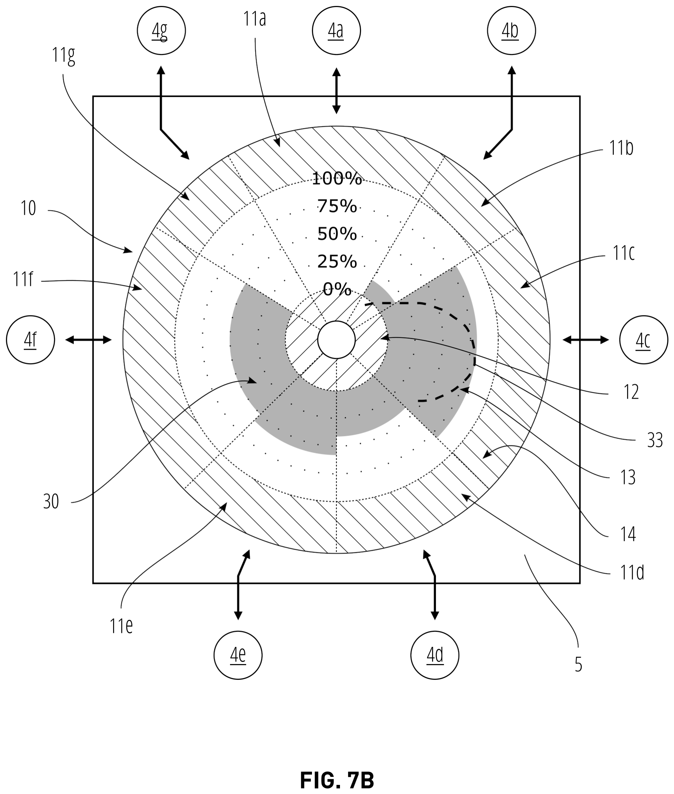

Once the brightness levels of each light 4a to 4g have been set by the control unit 6 according to the demanded brightness levels, the method proceeds to step S112 for adjusting the illumination of the second brightness control areas of each light 4a to 4g according to the brightness levels of each light 4a to 4g. As described by way of example of FIG. 7A before, the control unit 6 increased the brightness level of light 4c according to the demanded brightness level of a percentage value of 80%. Thus, the control unit 6 controls the illumination means of the indicator 30 illuminating the second brightness control area 13 assigned to the light 4c to increase its illuminated area accordingly as shown in FIG. 7B. As described by way of example of FIG. 6A before, the control unit 6 also decreased the brightness level of light 4d according to the demanded brightness level of a percentage value of 42%. Thus, the control unit 6 controls the illumination means of the indicator 30 illuminating the second brightness control area 13 assigned to the light 4d to decrease its indicator 30 accordingly as shown in FIG. 6C.

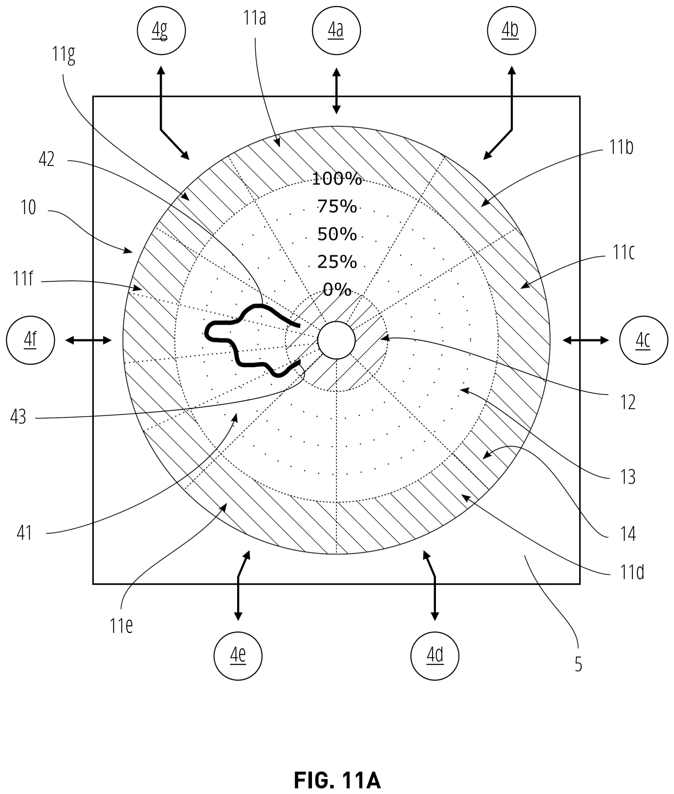

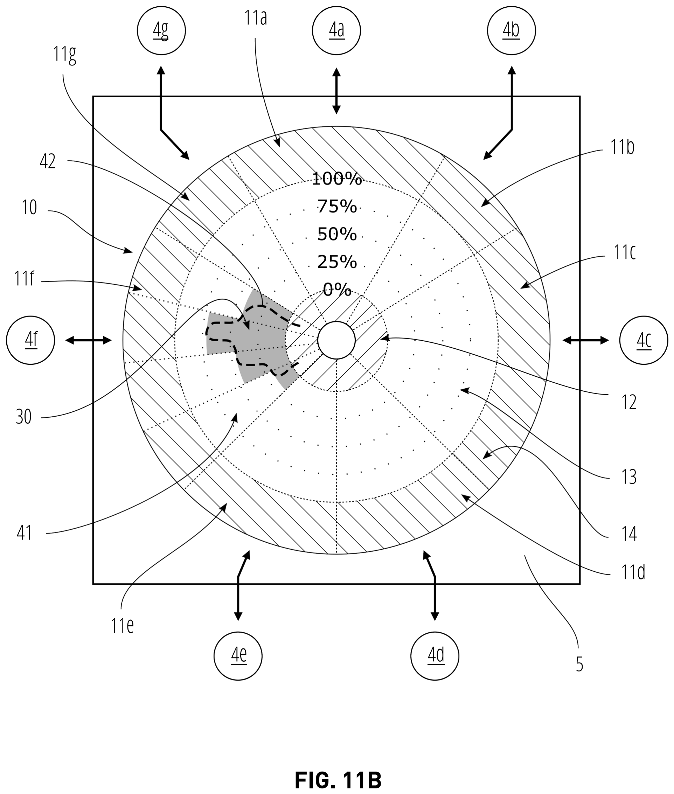

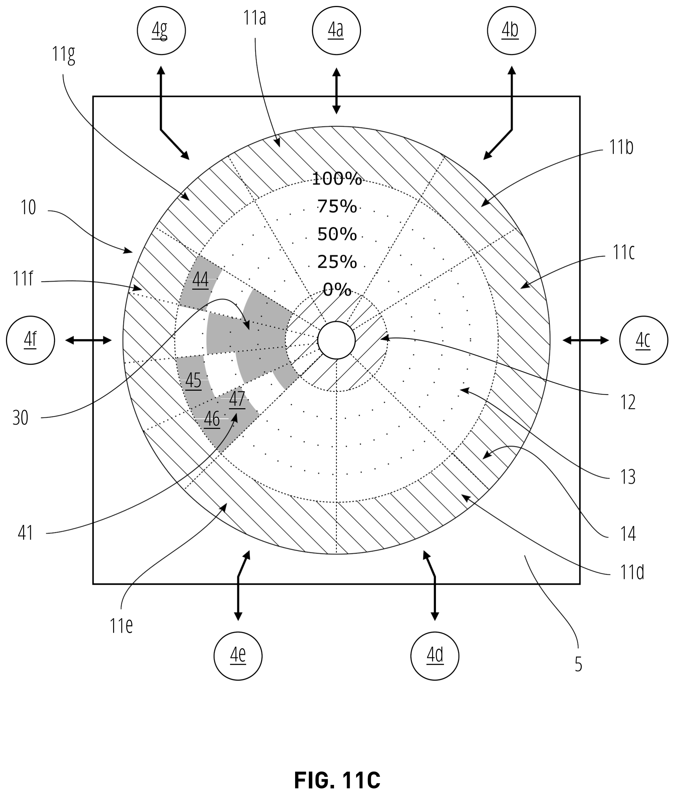

At least one of the lights 4a to 4g of the light arrangement 3 may be a matrix light having two or more light elements. The brightness levels of the light elements of the matrix light can be individually controlled such as separate lights. So, the method steps described above for controlling the brightness level of a light can be analogously applied to control each individual light element of a matrix light. For example, light 4f is designed as a matrix light having 16 light elements arranged in a 4 x 4 matrix. As exemplarily shown in FIG. 11A, the second brightness control area 13 of the light control area 11f assigned to the matrix light 4f comprises a number of switch fields corresponding to the number of light elements of the matrix light 4f. The switch fields of the light control area 11f assigned to the matrix light 4f are also arranged in a 4 x 4 matrix matching with the 4 x 4 matrix of the light elements of the matrix light 4f. The control unit 6 receives a gesture input 42 performed by an operator in the light control area 11f assigned to the matrix light 4f and determines a starting point 43 of the gesture input 42. The control unit 6 determines for each light element arranged in the 4 x 4 matrix a demanded brightness level according to the method steps as described above. As exemplarily can be seen in FIG. 11B, the control unit 6 sets the brightness level of each light element of the matrix light 4f according to the demanded brightness level of each light element and illuminates the second brightness control area 13 assigned to the matrix light 4f accordingly. Additionally, the operator may switch on or off single light elements of the matrix light 4f by tipping his finger in a corresponding switch field of the second brightness control area 13 of the light control area 11f. As can be exemplarily seen in FIG. 11C, the operator may tip in the switch fields 44, 45, 46 or 47 to switch on the light elements of the matrix light 4f assigned to the respective switch fields 44 to 47. Analogously, the operator may switch off a light element of the matrix light 4f by tipping in a switch field assigned to any one of the light emitting light elements of the matrix light 4f.

As mentioned above, the sensory input device 5 may optionally comprise keys 48 as depicted in FIG. 12A. For example, the sensory input device 5 comprises seven keys 48. Each key 48 may be programmable so that a specific lighting setting of one or more lights 4a to 4g can be stored to the memory 8 of the control unit 6 and assigned to one of the keys 48. The operator may store a lighting setting by pressing a key 48 longer than a predefined time limit such as for example two seconds. The operator may store any lighting setting as for example shown in FIG. 5B, FIG. 6C, FIG. 7B or any other setting.

If the control unit 6 detects that the operator is programming a key 48 the method proceeds to step S113 and the control unit 6 determines the brightness levels of the lights 4a to 4g, stores the brightness levels to the memory 8 and assigns the brightness levels to the key 48 programmed by the operator. Then, the operator may use the key 48 as a short-key for restoring the previously saved lighting setting. I. e. the operator may press the programmed key 48 again (shorter than the predefined time limit) and the control unit 6 sets the brightness levels of each of the lights 4a to 4g according to the saved lighting setting assigned to the key 48.

The key 48 may comprise a display to show the lighting setting being assigned to the key. For example, if a lighting setting as indicated by the indicator 30 in FIG. 5B is assigned to the key 48, the display of the key 48 would show a lighting setting corresponding to the indication of the indicator 30 in FIG. 5B.

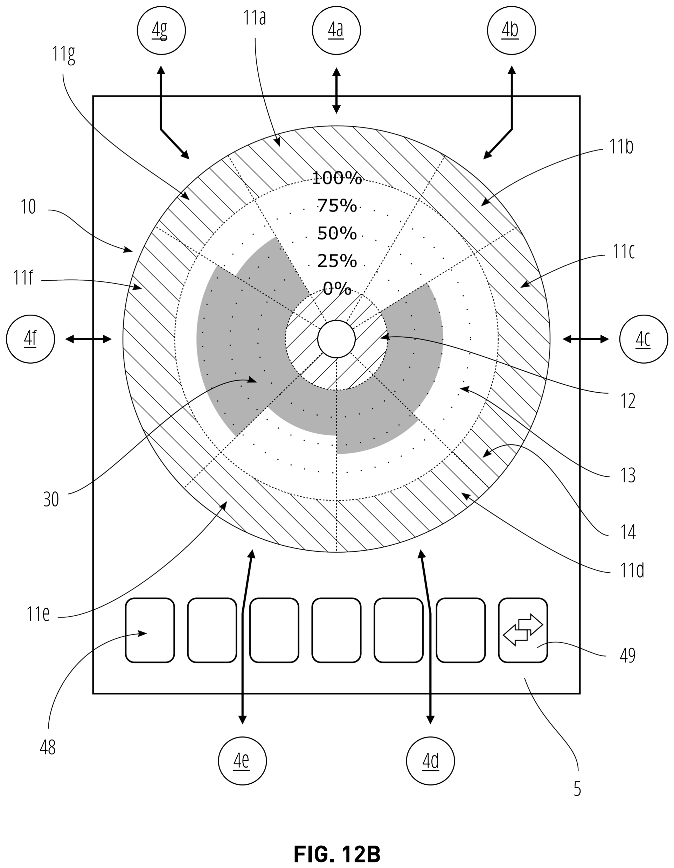

The sensory input device 5 may optionally comprise a swap key 49 as shown in FIG. 12A and FIG. 12B. The swap key 49 is preconfigured and causes a swapping of the lighting setting of the lights 4b, 4c and 4d at a right side of the light arrangement 3 with the lighting setting of the lights 4g, 4f and 4e at a left side of the light arrangement 3 if the swap key 49 is pressed. I. e., the control unit 6 recognizes if the swap key 49 is pressed and in response thereof, the control unit 6 sets the current brightness level of light 4b (FIG. 12A) as a new brightness level of light 4g (FIG. 12B) as well as the current brightness level of light 4g (FIG. 12A) as a new brightness level of light 4b (FIG. 12B), and sets the current brightness level of light 4c (FIG. 12A) as a new brightness level of light 4f (FIG. 12B) as well as the current brightness level of light 4f (FIG. 12A) as a new brightness level of light 4c (FIG. 12B), and sets the current brightness level of light 4d (FIG. 12A) as a new brightness level of light 4e (FIG. 12B) as well as the current brightness level of light 4e (FIG. 12A) as a new brightness level of light 4d (FIG. 12B). As can be seen in FIG. 12B, the control unit 6 controls the indicator 30 to adjust the illuminated areas of the second brightness control areas 13 accordingly. A swapping of the lighting setting of the lights 4b, 4c and 4d at the right side of the light arrangement 3 with the lighting setting of the lights 4g, 4f and 4e at the left side of the light arrangement 3 may be executed by the control unit 6 automatically, for example in response to a change of the driving direction of the vehicle 1 from one direction (e. g. direction to the north) to an opposite direction (direction to the south).

Optionally, the method proceeds to step S114 and the control unit 6 determines the number of the lights 4a to 4g of the light arrangement 3. As shown in FIG. 1 and FIG. 2, the light arrangement 3 comprises seven lights 4a to 4g assigned to the seven light control areas 11a to 11g of the sensor area 10. But an operator may add an additional light to the light arrangement 3 or remove a light from the light arrangement 3 so that the number of the light arrangement 3 may change. Then, the control unit 6 can determine the number of the lights of the light arrangement 3 again. The control unit 6 checks also whether the number of the light control areas 11a to 11g corresponds to the number of the lights of the light arrangement 3 and adjusts the number of light control areas according to the number of lights of the light arrangement 3 if the number of light control areas deviates from the number of the lights of the light arrangement 3. The control unit 6 may add or remove a light control area by adjusting the segmentation of the sensor area 10. The segmentation of the light control areas may be displayed to the operator by a display integrated in the sensory input device 5.

Optionally, the method proceeds to step S115 and the control unit 6 determines the absolute values of the maximum brightness levels of each light 4a to 4g of the light arrangement 3. The absolute value of a maximum brightness level of a light 4a to 4g depends on the technical properties of the respective light such as the luminous intensity (candela) or illuminance (lux). Then, the control unit 6 adjusts the size of each light control area 11a to 11g according to the absolute value of the maximum brightness level of the light 4a to 4g assigned to the corresponding light control area. The light control areas 11a to 11g and its sizes may be displayed to the operator by a display integrated in the sensory input device 5 wherein each light control area 11a to 11g is separated from another one by a separator line displayed in the display.

Finally, the method proceeds to step S116 and ends. The method may be restarted by the control unit 6 again.

It is assumed now that the brightness levels of all lights 4a to 4g of the light arrangement 3 are set to a percentage value of 0% (all lights switched off). As an example of use as depicted in FIG. 5A, an operator may perform an input gesture input 24 on the sensor area 10 of the sensory input device 5 starting at the starting point 25 in the first brightness control area 12 of the light control area 11a assigned to the light 4a. The gesture input 24 stays in the first brightness control areas 12 of the light control area 11a and 11b and extends into the second brightness control areas 13 of the light control areas 11c, 11d, 11e, and 11f. The gesture input 24 ends in the light control area 11f. The control unit 6 receives the gesture input 24 from the sensory input device 5 and processes the gesture input 24 by executing method steps as described above to determine a demanded brightness level for each of the lights 4a to 4g and to set the brightness levels of the lights 4a to 4g accordingly.

Since the gesture input 24 started in one of the first brightness control areas 12, the control unit 6 determines a maximum displacement 26 of the gesture input 24 from the first brightness control area 12 in the light control area 11c, a maximum displacement 27 of the gesture input 24 from the first brightness control area 12 in the light control area 11d, a maximum displacement 28 of the gesture input 24 from the first brightness control area 12 in the light control area 11e and a maximum displacement 29 of the gesture input 24 from the first brightness control area 12 in the light control area 11f. Based on the maximum displacements 26, 27, 28 and 29, the control unit 6 determines a demanded brightness level of a percentage value of 50% for light 4c, a demanded brightness level of a percentage value of 75% for the lights 4d and 4e and a demanded brightness level of a percentage value of 50% for the light 4f.

FIG. 5B shows to which percentage values the brightness levels of the lights 4a to 4g are set by the control unit 6 in response to the gesture input 24 represented by the illuminated areas of the corresponding light control areas. The brightness level of light 4g isn't changed because the control unit 6 couldn't determine a gesture input in the light control area 11g assigned to light 4g. The brightness levels of lights 4a and 4b are set to a percentage value of 0% since the control unit 6 couldn't determine that the gesture input 24 extends into the second or third brightness control areas 13 or 14 of the light control areas 11a and 11b. The brightness level of light 4c is set to a percentage value of 50% according to the demanded brightness level for light 4c, the brightness level of light 4d is set to a percentage value of 75% according to the demanded brightness level for light 4e, the brightness level of light 4e is set to a percentage value of 75% according to the demanded brightness level for light 4e and the brightness level of light 4f is set to a percentage value of 50% according to the demanded brightness level for light 4f. Thus as can be seen, the brightness levels of the lights 4c to 4f can be changed by a single gesture input.

As can be seen in FIG. 6A, the operator performs another gesture input 31 on the sensor area 10 based on the lighting setting of FIG. 5B. The gesture input 31 starts at the starting point 32 in the third brightness control area 14 of the light control area 11b assigned to the light 4b. The gesture input 31 extends into the second brightness control areas 13 of the light control areas 11b, 11c, 11d and 11e. The gesture input 24 ends in the light control area 11e. The control unit 6 receives the gesture input 24 from the sensory input device 5 and processes the gesture input 24 by executing method steps as described above to determine a demanded brightness level for each of the lights 4a to 4g and to set the brightness levels of the lights 4a to 4g accordingly.

Since the gesture input 24 started in one of the third brightness control areas 14, the control unit 6 determines a maximum displacement of the gesture input 24 from the third brightness control area 14 in the light control area 11b, a maximum displacement of the gesture input 24 from the third brightness control area 14 in the light control area 11c, a maximum displacement of the gesture input 24 from the third brightness control area 14 in the light control area 11d and a maximum displacement of the gesture input 24 from the third brightness control area 14 in the light control area 11e. Based on these maximum displacements, the control unit 6 determines a demanded brightness level of a percentage value of 62% for light 4b, a demanded brightness level of a percentage value of 62% for light 4c, a demanded brightness level of a percentage value of 42% for the light 4d and a demanded brightness level of a percentage value of 58% for the light 4e.

Depending on whether the control unit 6 compares the demanded brightness levels with brightness thresholds according to the optional method steps S109 or S110 or not, the brightness levels of the lights are set differently.

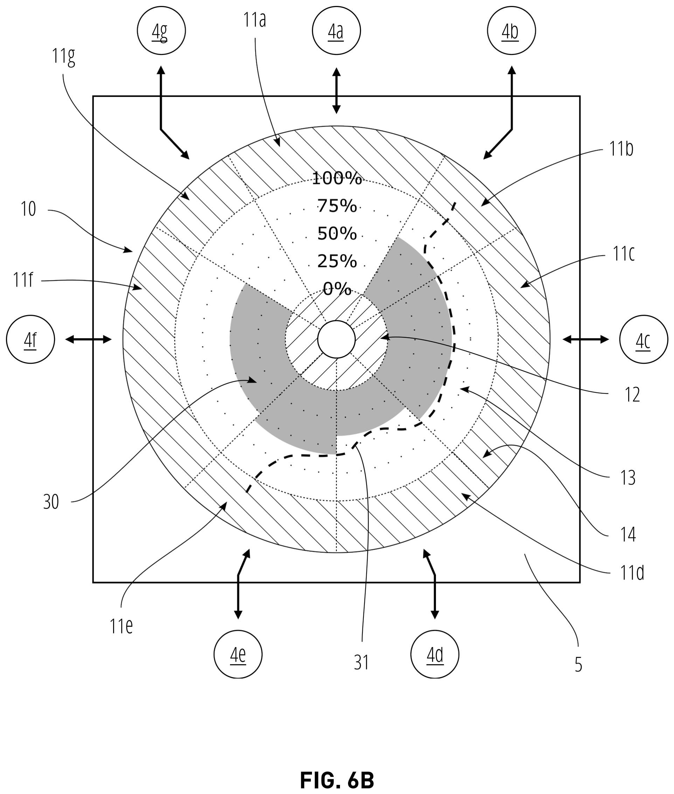

If the demanded brightness levels are not compared with brightness thresholds, the control unit 6 sets the brightness levels of the lights 4a to 4g as illustrated in FIG. 6B. Hence, the brightness levels of the lights 4f, 4g and 4a aren't changed because the control unit 6 couldn't determine a gesture input in the light control areas 11f, 11g and 11a. The brightness level of light 4b is set to a percentage value of 62% according to the demanded brightness level for light 4d. The brightness level of light 4c is set to a percentage value of 62% according to the demanded brightness level for light 4c. The brightness level of light 4d is set to a percentage value of 42% according to the demanded brightness level for light 4d. The brightness level of light 4e is set to a percentage value of 58% according to the demanded brightness level for light 4e. The illumination provided by the indicator 30 is adjusted accordingly.

If the demanded brightness levels are compared with brightness thresholds, the control unit 6 sets the brightness levels of the lights 4a to 4g as illustrated in FIG. 6C. As indicated by the illuminated areas of the light control areas 4c, 4d, 4e and 4f, the current brightness levels of lights 4c and 4f are set to a percentage value of 50% and the current brightness levels of lights 4d and 4e are set to a percentage value of 75%. Thus, the control unit 6 determines a brightness threshold of a percentage value of 50% for the lights 4c and 4f and a brightness threshold of a percentage value of 75% for the lights 4d and 4e. Since the light 4b hasn't been switched on before, the control unit 6 determine a brightness threshold of a percentage value of 0% for light 4b. The control unit 6 detects that the demanded brightness level of a percentage value of 42% for the light 4d deceeds the brightness threshold of a percentage value of 75% for light 4d and the demanded brightness level of a percentage value of 58% for light 4e deceeds the brightness threshold of a percentage value of 75% for light 4e whereas the demanded brightness levels for the lights 4b and 4c do not deceed their corresponding brightness thresholds.

FIG. 6C shows to which percentage values the brightness levels of the lights 4a to 4g represented by the illuminated areas of the corresponding light control areas are set by the control unit 6 in response to the gesture input 31 under consideration of the brightness thresholds determined before. The brightness levels of the lights 4f, 4g and 4a aren't changed because the control unit 6 couldn't determine a gesture input in the light control areas 11f, 11g and 11a. The brightness level of light 4d is set to a percentage value of 42% according to the demanded brightness level for light 4d since the demanded brightness level for light 4d deceeds the brightness threshold for light 4d. The brightness level of light 4e is set to a percentage value of 58% according to the demanded brightness level for light 4e since the demanded brightness level for light 4e deceeds the brightness threshold for light 4e. The brightness levels of the lights 4b and 4c aren't changed because the demanded brightness levels for the lights 4b and 4c do not deceed the brightness thresholds for the lights 4b and 4c. The illumination provided by the indicator 30 is adjusted accordingly.

For the following description it is assumed that the control unit 6 compares the demanded brightness levels with brightness thresholds according to method steps S109 or S110.

As can be seen in FIG. 7A, the operator performs another gesture input 33 on the sensor area 10 based on the lighting setting of FIG. 6C. The gesture input 33 starts at the starting point 34 in the first brightness control area 12 of the light control area 11b assigned to the light 4b. The gesture input 33 extends into the second brightness control areas 13 of the light control areas 11b and 11c. The gesture input 33 ends in the light control area 11c. The control unit 6 receives the gesture input 33 from the sensory input device 5 and processes the gesture input 33 by executing method steps as described above to determine a demanded brightness level for each of the lights 4a to 4g and to set the brightness levels of the lights 4a to 4g accordingly.

Since the gesture input 33 started in one of the first brightness control areas 12, the control unit 6 determines a maximum displacement of the gesture input 33 from the first brightness control area 12 in the light control area 11b and a maximum displacement of the gesture input 33 from the first brightness control area 12 in the light control area 11c. Based on these maximum displacements, the control unit 6 determines a demanded brightness level of a percentage value of 19% for light 4b and a demanded brightness level of a percentage value of 80% for light 4c.

As indicated by the illuminated areas of the light control areas 4b and 4c, the current brightness levels of light 4b is set to a percentage value of 0% and the current brightness levels of light 4c is set to a percentage value of 50%. Thus, the control unit 6 determines a brightness threshold of a percentage value of 0% for the light 4b and a brightness threshold of a percentage value of 50% for the light 4c. The control unit 6 detects that the demanded brightness level of a percentage value of 19% for the light 4b exceeds the brightness level of a percentage value of 0% and that the demanded brightness level of a percentage value of 80% for the light 4c exceeds the brightness level of a percentage value of 50%.

FIG. 7B shows to which percentage values the brightness levels of the lights 4b and 4c are set by the control unit 6 in response to the gesture input 33 represented by the illuminated areas of the corresponding light control areas. The brightness level of the lights 4d, 4e, 4f, 4g and 4a aren't changed because the control unit 6 couldn't determine a gesture input in the light control areas 11d, 11e, 11f, 11g and 11a. The brightness level of light 4b is set to a percentage value of 19% according to the demanded brightness level for light 4b since the demanded brightness level for light 4b exceeds the brightness threshold for light 4b. The brightness level of light 4c is set to a percentage value of 80% according to the demanded brightness level for light 4c since the demanded brightness level for light 4c exceeds the brightness threshold for light 4c. The illumination provided by the indicator 30 is adjusted accordingly.

As can be seen in FIG. 8A, the operator performs another gesture input 35 on the sensor area 10 based on the lighting setting of FIG. 7B. The gesture input 35 starts at the starting point 36 in the second brightness control area 13 of the light control area 11d assigned to the light 4d. The gesture input 35 ends in the light control area 11d. The control unit 6 receives the gesture input 35 from the sensory input device 5 and processes the gesture input 35 by executing method steps as described above to determine a demanded brightness level for each of the lights 4a to 4g and to set the brightness levels of the lights 4a to 4g accordingly.

Since the gesture input 35 started in one of the second brightness control area 13, the control unit 6 determines a maximum percentage value of 88% of the gesture input 35 in the second brightness control area 13 and a minimum percentage value of 14% of the gesture input 35 in the second brightness control area 13. Then, the control unit 6 determines a median displacement of the gesture input 35. The median displacement may depend on the method of calculating a mean value, for example determining an arithmetic mean, geometric mean or an integral. The median displacement may have a percentage value of 51% based on the maximum percentage value of 88% and the minimum percentage value of 14%. Then, the control unit 6 determines a demanded brightness level of a percentage value of 51% for light 4d. If another method is used for determining the median displacement, such as an arithmetic mean or an integral, a different percentage value may be determined by the control unit 6.

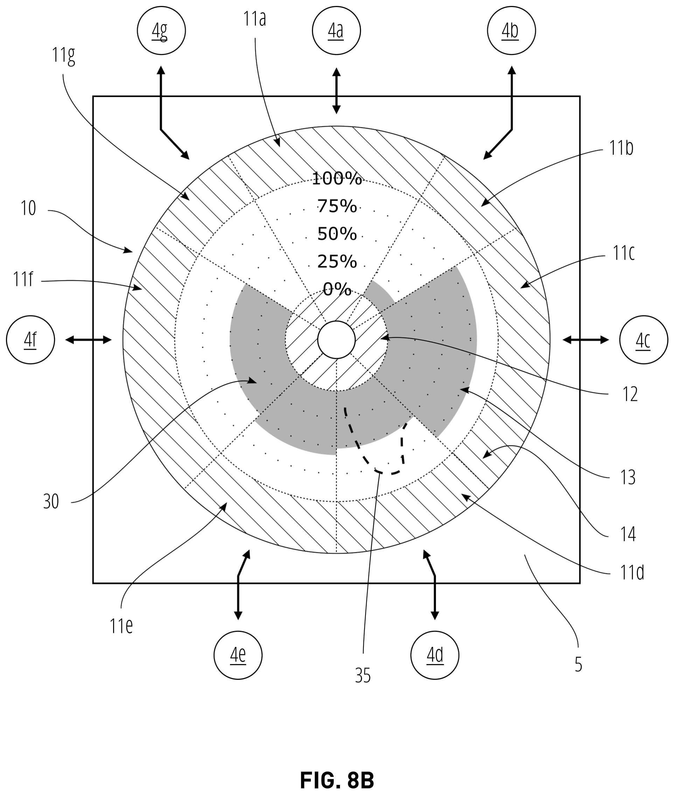

FIG. 8B shows to which percentage values the brightness level of the light 4d is set by the control unit 6 in response to the gesture input 35 represented by the illuminated areas of the corresponding light control areas. The brightness levels of the lights 4a, 4b, 4c, 4e, 4f and 4g aren't changed because the control unit 6 couldn't determine a gesture input in the light control areas 11a, 11b, 11c, 11e, 11f and 11g. The brightness level of light 4d is set to a percentage value of 51% according to the demanded brightness level for light 4d.

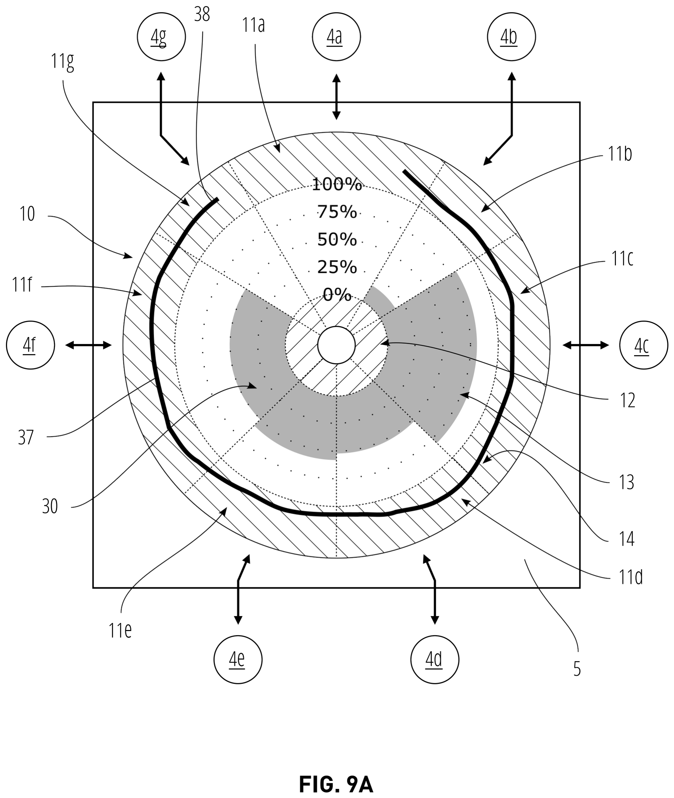

As can be seen in FIG. 9A, the operator performs another gesture input 37 on the sensor area 10 based on the lighting setting of FIG. 8B. The gesture input 37 starts at the starting point 38 in the third brightness control area 14 of the light control area 11g assigned to the light 4g and ends in the light control area 11a. The gesture input 37 stays in the third brightness control area 14 of the light control areas 11a to 11g and doesn't extend into any first or second brightness control area 12 or 13. The control unit 6 receives the gesture input 37 from the sensory input device 5 and processes the gesture input 37 by executing method steps as described above to determine a demanded brightness level for each of the lights 4a to 4g and to set the brightness levels of the lights 4a to 4g accordingly.

Since the gesture input 37 stays in the third brightness control area 14 of each light 4a to 4g, the control unit 6 determines a demanded brightness level of a percentage value of 100% for the lights 4a to 4g.

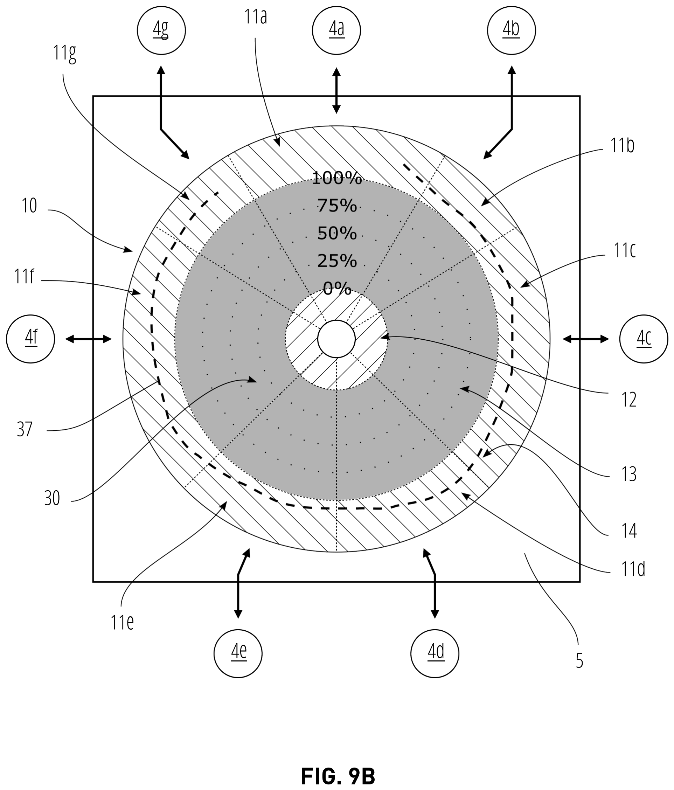

FIG. 9B shows to which percentage values the brightness levels of the lights 4a to 4g are set by the control unit 6 in response to the gesture input 37 represented by the illuminated areas of the corresponding light control areas. The brightness levels of the lights 4a to 4g are set each to a percentage value of 100% according to the demanded brightness levels for the lights 4a to 4g. The illumination provided by the indicator 30 is adjusted accordingly.

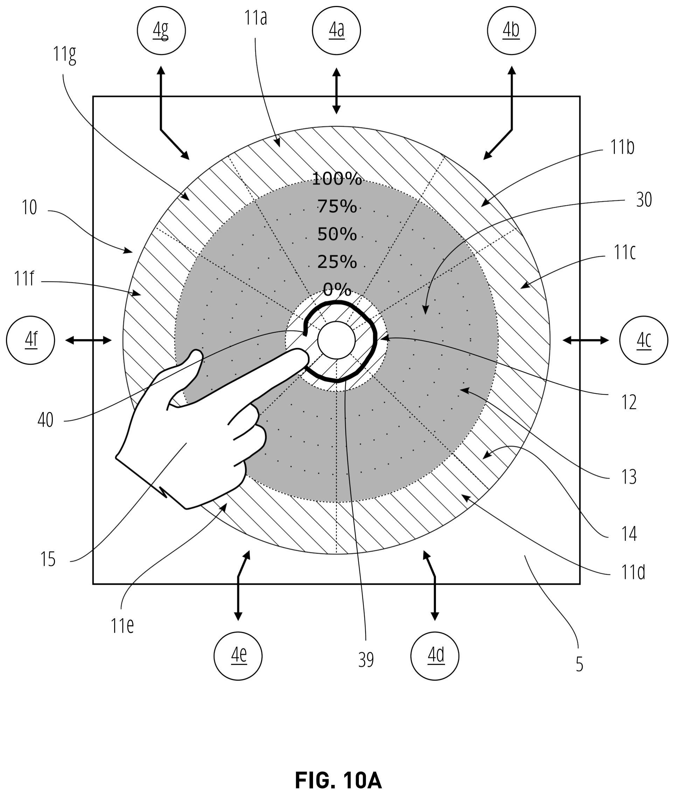

As can be seen in FIG. 10A, the operator performs another gesture input 39 on the sensor area 10 based on the lighting setting of FIG. 9B. The gesture input 39 starts at the starting point 40 in the first brightness control area 12 of the light control area 11f assigned to the light 4f and ends also in the light control area 11f. The gesture input 39 stays in the first brightness control area 12 of the light control areas 11a to 11g and doesn't extend into any second or third brightness control area 13 or 14. The control unit 6 receives the gesture input 39 from the sensory input device 5 and processes the gesture input 39 by executing method steps as described above to determine a demanded brightness level for each of the lights 4a to 4g and to set the brightness levels of the lights 4a to 4g accordingly.

Since the gesture input 39 stays in the first brightness control area 12 of each light 4a to 4g, the control unit 6 determines a demanded brightness level of a percentage value of 0% for the lights 4a to 4g.

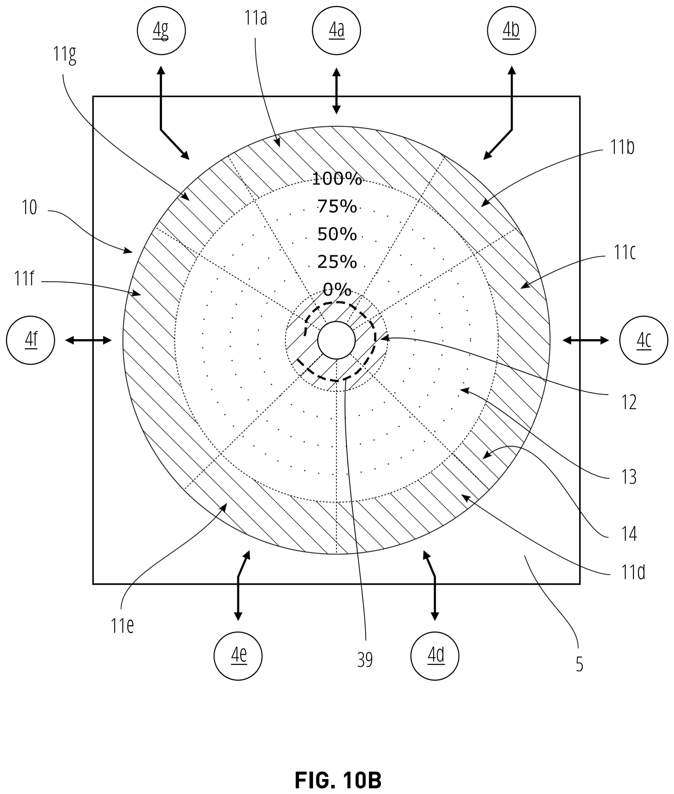

FIG. 10B shows to which percentage values the brightness levels of the lights 4a to 4g are set by the control unit 6 in response to the gesture input 39. The brightness levels of the lights 4a to 4g are set each to a percentage value of 0% according to the demanded brightness levels for the lights 4a to 4g. So, all lights 4a to 4g are switched off again. The illumination provided by the indicator 30 is adjusted accordingly and also switched off in every second light control area 11a to 11g.

All references cited herein are incorporated herein in their entireties. If there is a conflict between definitions herein and in an incorporated reference, the definition herein shall control.

### LISTING OF DRAWING ELEMENTS

1 vehicle
2 light control system
3 light arrangement
4a light
4b light
4c light
4d light
4e light
4f light
4g light
5 sensory input device
6 control unit
7 controller
8 memory
9 interface
10 sensor area
11a first light control area
11b second light control area
11c third light control area
11d fourth light control area
11e fifth light control area
11f sixth light control area
11g seventh light control area
12 first brightness control area
13 second brightness control area
14 third brightness control area
15 hand
16 gesture input
17 starting point
18 maximum displacement
19 maximum displacement
20 maximum displacement
21 gesture input
22 starting point
23 maximum displacement
24 gesture input
25 starting point
26 maximum displacement
27 maximum displacement
28 maximum displacement
29 maximum displacement
30 indicator
31 gesture input
32 starting point
33 gesture input
34 starting point
35 gesture input
36 starting point
37 gesture input
38 starting point
39 gesture input
40 starting point
41 matrix area
42 gesture input
43 starting point
44 switch field
45 switch field
46 switch field
47 switch field
48 key
49 swap key

## Claims

1. A light control system (2) for an agricultural vehicle (1), comprising a light arrangement (3) comprising at least two lights (4a - 4g);
a control unit (6); and
a sensory input device (5) with a sensor area (10) for recognizing a gesture input (16, 24); the sensor area (10) comprising
a first light control area (11a) assigned to one of the lights for controlling the one light (4a); and
a second light control area (11b) assigned to the other light for controlling the other light (4b); wherein
the control unit (6) is configured to control the lights (4a - 4g) of the light arrangement (3) independently from each other in response to a single gesture input (16, 24);
**characterized in that**
the control unit (6) is configured
to swap a lighting setting of the lights (4b, 4c, 4d) at a right side of the light arrangement 3 with a lighting setting of the lights (4g, 4f, 4e) at a left side of the light arrangement 3.

2. The light control system (2) of claim 1, wherein the sensor area (10) is a touch sensitive area for recognizing touch gestures.

3. The light control system (2) of claim 1 or 2, wherein
the control unit (6) is configured to set a brightness level of each light (4a - 4g) independently from any other light in response to a single gesture input (16, 24) to a level greater than a minimum brightness level and smaller than a maximum brightness level.

4. The light control system (2) of any one of claims 1 to 3, wherein the first light control area (11a) and the second light control area (11b) comprise each a first brightness control area (12), a second brightness control area (13) and a third brightness control area (14) for controlling the brightness of the one and the other light (4a, 4b).

5. The light control system (2) of claim 4, wherein the control unit (6) is configured to set a brightness level of a light of the light arrangement (3)
to minimum brightness if a gesture input recognized in the light control area of the assigned light is located in the first brightness control area (12) of the light control area of the assigned light only; and
to maximum brightness if a gesture input recognized in the light control area of the assigned light is located in the third brightness control area (14) of the light control area of the assigned light only.

6. The light control system (2) of claim 4 or 5, wherein the control unit (6) is configured
to determine whether the gesture input was started in a first, a second or a third brightness control area (12, 13, 14).

7. The light control system (2) of any one of claims 4 to 6, wherein the control unit (6) is configured
to determine in which of the first brightness control areas (12), second brightness control areas (13) or third brightness control areas (14) the gesture input was started.

8. The light control system (2) of any one of claims 4 to 7, wherein the control unit (6) is configured
to determine a demanded brightness level of a light according to a gesture input recognized in the second brightness control area (13) of the assigned light; and
to set the brightness level of the light according to the demanded brightness level of the light.

9. The light control system (2) of claim 8, wherein the light arrangement (3) comprises a non-dimmable light
being switchable in an off state if the demanded brightness level is below a switching threshold; and
being switchable in an on state if the demanded brightness level is above the switching threshold.

10. The light control system (2) of any one of claims 4 to 9, wherein the control unit (6) is configured
to determine a demanded brightness level of a light according to a maximum displacement (18) of the gesture input in the second brightness control area (13) of the assigned light started from the first or the third brightness control area (12, 14).

11. The light control system (2) of claim 10, wherein the control unit (6) is configured to set the current brightness level of a light as a brightness threshold; and
to increase the brightness level of the light if
a starting point (17, 25) of the gesture input was recognized in the first brightness control area (12) of the assigned light; and
the demanded brightness level exceeds the brightness threshold.

12. The light control system (2) of claim 10 or 11, wherein the control unit (6) is configured
to set the current brightness level of a light as a brightness threshold; and
to reduce the brightness level of the light if
a starting point (17, 25) of the gesture input was recognized in the third brightness control area (14) of the assigned light; and
the demanded brightness level deceeds the brightness threshold.

13. The light control system (2) of any one of claims 4 to 12, wherein the control unit (6) is configured
to determine a demanded brightness level of a light according to a median of a displacement of the gesture input in the second brightness control area (13) of the assigned light if a starting point (17, 25) of the gesture input was detected in the second brightness control area (13).

14. The light control system (2) of any one of claims 4 to 13, wherein
at least one of the lights (4a - 4g) of the light arrangement (3) is a matrix light having two or more light elements; and
the second brightness control area (13) of the assigned matrix light comprises a separate switch field (44 - 47) for each light element of the matrix light.

15. The light control system (2) of any one of claims 4 to 14, wherein the first, the second and the third brightness control areas (12, 13, 14) are arranged in circular shapes.

16. The light control system (2) of claim 15, wherein
the first brightness control areas (12) are arranged in most inner circular shapes; and
the third brightness control areas (14) are arranged in most outer circular shapes.

17. The light control system (2) of any one of the preceding claims, wherein
the sensory input device (5) comprises an indicator to indicate a current brightness level for each of the one and the other lights (4a, 4b); and wherein the
the control unit (6) is configured
to determine a brightness level of the one light (4a) and a brightness level of the other light (4b); and
to control the indicator to indicate the brightness level of the one light (4a) and a brightness level of the other light (4b).

18. The light control system (2) of claim 17, wherein the indicator is at least partly integrated in the first light control area (11a) for indicating the brightness level of the one light (4a) and in the second light control area (11b) for indicating the brightness level of the other light (4b).

19. The light control system (2) of claim 17 or 18, wherein the indicator is illuminable.

20. The light control system (2) of any one of the preceding claims, comprising at least one key (48); wherein
the control unit (6) is configured
to determine a brightness level of the one light (4a) and a brightness level of the other light (4b); and
to assign at least one of the brightness levels of the one and the other light (4a, 4b) to the key (48).

21. The light control system (2) of any one of the preceding claims, wherein the control unit (6) is configured
to determine a number of lights of the light arrangement (3); and
to assign each light (4a, 4b) to a different light control area (11a, 11b).

22. The light control system (2) of claim 21, wherein the control unit (6) is configured
to adjust a number of light control areas of the sensor area (10) according to the number of lights of the light arrangement (3).

23. The light control system (2) of any one of the preceding claims, wherein the control unit (6) is configured
to determine an absolute value of the maximum brightness level of the one light (4a) and an absolute value of the maximum brightness level of the other light (4b); and
to adjust the size of the first light control area (11a) according to the absolute value of the maximum brightness level of the one light (4a) and the size of the second light control area (11b) according to the absolute value of the maximum brightness level of the other light (4b).

24. A method of controlling the brightness level of at least two lights (4a, 4b) of a light arrangement (3) by a sensory input device (5) comprising a first light control area (11a) with a first, a second and a third brightness control area (12, 13, 14) assigned to one of the at least two lights and a second light control area (11b) with a first, a second and a third brightness control area (12, 13, 14) assigned to the other of the at least two lights, the method comprising the steps:
Recognizing a gesture input in the second brightness control area (13) assigned to the one light and recognizing a gesture input in the second brightness control area (13) assigned to the other light;
determining a demanded brightness level for each of the at least two lights (4a, 4b) according to a maximum displacement (18) of the gesture input in each of the second brightness control areas (13) assigned to the at least two lights (4a, 4b) started from a first or a third brightness control area (12, 14); or
determining a demanded brightness level for each of the at least two lights (4a, 4b) according to a median of a displacement of the gesture input in each of the second brightness control area (13) assigned to the at least two lights (4a, 4b) if a starting point (17, 25) of the gesture input was detected in one of the second brightness control areas (13);
**characterized by**
swapping a lighting setting of the lights (4b, 4c, 4d) at a right side of the light arrangement 3 with a lighting setting of the lights (4g, 4f, 4e) at a left side of the light arrangement 3.
